# EUROPEAN PATENT APPLICATION

(11) **EP 4 451 729 A1**
(43) Date of publication of application: **23.10.2024**
(21) Application number: 22926772.9
(22) Date of filing: 25.10.2022
(51) Int. Cl.: H04W 24/04

(54) **METHODS FOR DETERMINING ROOT CAUSE FAULT, AND APPARATUSES**

(30) Priority: 18.02.2022 CN 202210152355
(71) Applicant: Huawei Technologies Co., Ltd., Shenzhen, Guangdong 518129 (CN)
(72) Inventor: WANG, Shanshan, Shenzhen, Guangdong 518129 (CN); DING, Ding, Shenzhen, Guangdong 518129 (CN); JU, Rui, Shenzhen, Guangdong 518129 (CN); YANG, Yongjun, Shenzhen, Guangdong 518129 (CN); WANG, Haiming, Shenzhen, Guangdong 518129 (CN)
(74) Representative: Körber, Martin Hans
(86) International application number: PCT/CN2022/127162
(87) International publication number: WO 2023/155468

(57) **Abstract**

A root cause failure determining method and an apparatus are provided. The method includes: A first network element determines alarm information of N objects, where N is an integer greater than or equal to 2; and the first network element determines a root cause failure of the alarm information of the N objects based on an object association relationship, where the root cause failure is alarm information of M objects in the N objects, and M is a positive integer less than or equal to N. According to the method and apparatus of this disclosure, a root cause failure of a plurality of pieces of alarm information can be determined, and a service ticket is dispatched only for the root cause failure, to reduce operation and maintenance costs.

## Description

This application claims priority to Chinese Patent Application No. 202210152355.7, filed with the China National Intellectual Property Administration on February 18, 2022 and entitled "ROOT CAUSE FAILURE DETERMINING METHOD AND APPARATUS", which is incorporated herein by reference in its entirety.

### TECHNICAL FIELD

This disclosure relates to the field of communication technologies, and in particular, to a root cause failure determining method and an apparatus.

### BACKGROUND

In a wireless communication network, for example, in a mobile communication network, the network supports more and more diverse services, and therefore, needs to meet more and more requirements. For example, the network needs to be able to support an ultra-high speed, an ultra-low latency, and/or massive connections. This feature makes network planning, network configuration, and/or resource scheduling increasingly complex. These new requirements, scenarios, and features bring unprecedented challenges to network planning, operation and maintenance, and efficient operation. How to improve network operation and maintenance efficiency is a problem worth studying.

### SUMMARY

This disclosure provides a root cause failure determining method and an apparatus, to determine a root cause failure of a plurality of pieces of alarm information, so that a service ticket can be dispatched only for the root cause failure, to reduce operation and maintenance costs.

According to a first aspect, a root cause failure determining method is provided. The method is performed by a first network element, and the first network element may be a CU, a DU, an RU, an SMOF, or the like, or may be a component (a processor, a chip, or the like) in the first network element, or may be a software module or the like. The method includes: Alarm information of N objects is determined, where N is an integer greater than or equal to 2; and a root cause failure of the alarm information of the N objects is determined based on an object association relationship, where the root cause failure is alarm information of M objects in the N objects, and M is a positive integer less than or equal to N.

According to the foregoing method, the first network element can determine a root cause failure of alarm information of a plurality of objects, and can subsequently report only alarm information corresponding to the root cause failure to a network management system of a carrier, and dispatch a service ticket. For alarm information other than the root cause failure, no service ticket is dispatched, to reduce the operation and maintenance costs.

In a design, that a root cause failure of the alarm information of the N objects is determined based on an object association relationship includes: The root cause failure of the alarm information of the N objects is determined based on the object association relationship and generation time of the alarm information of the N objects.

Based on the foregoing design, when the root cause failure is determined, not only an association relationship between objects is considered, but also generation time of different alarm information is considered. Even if there is an association relationship between objects of some pieces of alarm information, a generation time difference of the corresponding pieces of alarm information is great, and there is no causal relationship between these pieces of alarm information in essence. However, by using the foregoing method, the foregoing possibility can be reduced, and accuracy of determining the root cause failure can be improved.

In a design, that the root cause failure of the alarm information of the N objects is determined based on the object association relationship and generation time of the alarm information of the N objects includes: X association relationship sets are determined based on the object association relationship; and for each association relationship set: L objects in the association relationship set are determined based on generation time of alarm information of objects included in the association relationship set, where a generation time difference of alarm information of the L objects is less than (or less than or equal to) a threshold; and a root cause failure of the alarm information of the L obj ects is determined, where the root cause failure is alarm information of at least one of the L objects, and both X and L are positive integers.

According to the foregoing method, an association relationship set is first determined based on the object association relationship, where the association relationship set includes at least one object with an association relationship. Then, objects of which generation time does not meet a condition are removed from the association relationship set based on the generation time of the different alarm information. Finally, for each association relationship set, alarm information of one or more objects is determined as a root cause failure, to ensure accuracy of the determined root cause failure.

In a design, that the root cause failure of the alarm information of the N objects is determined based on the object association relationship and generation time of the alarm information of the N objects includes: P association relationship sets are determined based on the object association relationship and the generation time of the alarm information of the N objects; and for each association relationship set: a root cause failure of alarm information of Q objects included in the association relationship set is determined, where the root cause failure is alarm information of at least one of the Q objects, the Q objects have an association relationship, a generation time difference of the alarm information of the Q objects with the association relationship is less than a threshold, and both P and Q are positive integers.

According to the foregoing method, in determining the association relationship set, factors such as the association relationship between the objects and the generation time of the alarm information are also considered. The determined association relationship set includes at least one object with an association relationship, and generation time of alarm information of objects included in the set meets a condition. For each association relationship set, alarm information of at least one or more objects is determined as a root cause failure, to ensure accuracy of the determined root cause failure.

In a design, the N objects include N1 objects and N2 objects, both N1 and N2 are positive integers, a sum of N1 and N2 is equal to N, and that alarm information of N objects is determined includes: Alarm information of the N1 objects is detected; and alarm information of the N2 objects is received from a second network element.

According to foregoing method, the first network element can detect the alarm information of the N1 objects, and receive the alarm information of the N2 objects from the second network element. A root cause failure of the alarm information of the N1 objects and the alarm information of the N2 objects is determined. A service ticket can be dispatched only for the root cause failure, and for other alarm information, no service ticket is dispatched, to reduce the operation and maintenance costs.

In a design, the first network element is a central unit CU, the second network element is a distributed unit DU, the alarm information of the N1 objects includes alarm information of an object of the CU, and the alarm information of the N2 objects includes at least one of the following: alarm information of an object of the DU, alarm information of an object of a radio unit RU, alarm information of an object of a cloud resource corresponding to the RU, or alarm information of an object of a cloud resource corresponding to the DU.

According to the foregoing method, the first network element is the CU, and the second network element is the DU. The DU collects alarm information, and reports the collected alarm information to the CU. The alarm information collected by the DU includes the alarm information of the N2 objects. The CU detects the alarm information of the N1 objects. The CU can perform root cause analysis on the alarm information of the N1 objects and the alarm information of the N2 objects to determine the root cause failure and reduce the operation and maintenance costs.

In a design, the first network element is a DU, the second network element is an RU, the alarm information of the N1 objects includes alarm information of an object of the DU, and the alarm information of the N2 objects includes at least one of the following: alarm information of an object of the RU, or alarm information of an object of a cloud resource corresponding to the RU.

According to the foregoing method, the first network element is the DU, the second network element is the RU, and the RU collects the alarm information of the N2 objects, and reports the alarm information to the DU. The DU performs root cause analysis on detected alarm information of the N1 objects and received alarm information of the N2 objects, to determine the root cause failure and reduce the operation and maintenance costs.

In a design, the first network element is an RU, a DU, or a CU, the alarm information of the N1 objects includes alarm information of an object of the first network element, the second network element is a cloud resource corresponding to the first network element, and the alarm information of the N2 objects includes alarm information of an object of the cloud resource corresponding to the first network element.

According to the foregoing method, the first network element is the RU, the DU, or the CU. That the first network element is the RU is used as an example. If the object corresponding to the RU in the cloud resource generates alarm information, the cloud resource may report the alarm information to the RU. When detecting alarm information of N1 objects of the RU and alarm information that is of N2 objects corresponding to the RU and reported by the cloud resource, the RU may perform root cause analysis to determine the root cause failure and reduce the operation and maintenance costs.

In a design, for the N2 objects, alarm information of each object is first-type alarm information, and the first-type alarm information includes at least one of the following: an identifier of the object, an identifier of the second network element, or an identifier of a network element associated with the second network element.

In a current design, alarm information generated by the CU, the DU, the RU, the cloud resource, and the like is not reported to a corresponding managing network element or a network element that has a correspondence. However, in this design, alarm information generated or collected by the RU is reported to the managing DU or the DU that has a correspondence, and alarm information generated or collected by the DU is reported to a CU that has a correspondence. Alarm information generated by the cloud resource Cloud may be reported to a network element corresponding to the alarm information. In this disclosure, the CU, the DU, the RU, or the like performs root cause analysis to determine the root cause failure and reduce the operation and maintenance costs. In addition, for a managed or lower-layer network element that has a correspondence, alarm information reported to an upper-layer network element, namely, the foregoing first-type alarm information, is further improved compared with the alarm information, and the alarm information may no longer include a failure cause, a failure identifier, and the like, but include an object identifier, an identifier of a corresponding network element, or an association relationship between different network elements. For a network element that performs root cause analysis, an association relationship between different network elements may be easily obtained based on an association relationship between different network elements included in the alarm information, to improve root cause analysis efficiency.

In a design, the method further includes: First indication information is sent to a third network element, where the first indication information indicates the root cause failure of the alarm information of the N objects.

According to the foregoing method, the third network element may be an SMOF or the like, and the first network element may be the CU, the DU, the RU, or the like. The CU, the DU, or the RU may report the determined root cause failure to the SMOF. The SMOF can report only alarm information corresponding to the root cause failure to the network management system of the carrier, to reduce the operation and maintenance costs.

In a design, the method further includes: The object association relationship is obtained, where the object association relationship is indicated by a configuration file or a configuration message from the third network element.

According to the foregoing method, the third network element may be an SMOF, and the SMOF may configure an association relationship between objects for the CU, the DU, the RU, or the like. Optionally, the SMOF may update the association relationship between the objects periodically or based on a trigger condition, or the like by using big data, artificial intelligence, or the like, and may synchronize an updated object association relationship to the CU, the DU, the RU, or the like. By using the foregoing method, the object association relationship can be flexibly configured or updated, to improve the accuracy of determining the root cause failure.

In a design, that the object association relationship is obtained includes: A first configuration file or a first configuration message is received from the third network element, where the first configuration file or the first configuration message indicates a first object association relationship; a second configuration file or a second configuration message is received from the third network element, where the second configuration file or the second configuration message indicates a second object association relationship; and the object association relationship is determined based on the first object association relationship and the second object association relationship.

In a design, the N objects include N1 objects, N2 objects, and N3 objects, values of N1, N2, and N3 are all positive integers, a sum of N1, N2, and N3 is equal to N, and that alarm information of N objects is determined includes:

Alarm information is received from a first network element, where the alarm information includes alarm information of the N1 objects; alarm information is received from a second network element, where the alarm information includes alarm information of the N2 objects; and alarm information is received from a third network element, where the alarm information includes alarm information of the N3 objects.

According to the foregoing method, a fourth network element separately receives the alarm information from the first network element, the second network element, and the third network element. Root cause analysis is performed on the alarm information of the three network elements to determine the root cause failure. Subsequently, only the root cause failure can be reported to the network management system of the carrier and a service ticket can be dispatched. For other alarm information, no service ticket is dispatched, to reduce the operation and maintenance costs.

In a design, the alarm information is second-type alarm information, and the second-type alarm information includes at least one of the following: an object identifier, an identifier of a corresponding network element, a failure identifier, or a failure cause.

According to a second aspect, a root cause failure determining method is provided. The method is performed by a second network element, and the second network element is a cloud resource Cloud, an RU, a DU, or the like, or is a component (a processor, a chip, or the like) in the second network element.

The method includes: Alarm information of N2 objects is sent to a first network element, where the alarm information is first-type alarm information, where for the N2 objects, first-type alarm information of each object includes at least one of the following: an identifier of the object, an identifier of a second network element, or an identifier of a network element associated with the second network element, where N2 is a positive integer.

According to a third aspect, a root cause failure determining method is provided. The method is performed by a third network element, where the third network element is an SMOF or the like, or is a component (a processor, a chip, or the like) in the third network element. The method includes: First indication information is received, where the first indication information indicates a root cause failure of alarm information of N objects, where the root cause failure is alarm information of M objects in the N objects, N is a positive integer greater than or equal to 2, and M is a positive integer less than or equal to N.

According to the foregoing design, the first network element can report indication information of an analyzed root cause failure to the third network element, and the third network element can determine a root cause failure based on the indication information, and report alarm information corresponding to the root cause failure to a network management system of a carrier, to reduce operation and maintenance costs. Optionally, the third network element may supplement and/or update the root cause failure analyzed by the first network element, to improve accuracy of determining the root cause failure.

In a design, the method further includes: A configuration file or a configuration message that indicates an object association relationship is sent to a first network element.

In a design, that a configuration file or a configuration message that indicates an object association relationship is sent to a first network element includes: A first configuration file or a first configuration message is sent to the first network element, where the first configuration file or the first configuration message indicates a first object association relationship; and a second configuration file or a second configuration message is sent to the first network element, where the second configuration file or the second configuration message indicates a second object association relationship.

In a design, the N objects include N1 objects and N2 objects, both N1 and N2 are positive integers, and a sum of N1 and N2 is equal to N, where the N1 objects include an object of a central unit CU, and the N2 objects include at least one of the following: an object of a distributed unit DU, an object of a cloud resource corresponding to the DU, an object of a radio unit RU, or an object of a cloud resource corresponding to the RU; the N1 objects include an object of a DU, and the N2 objects include at least one of the following: an object of an RU, or an object of a cloud resource corresponding to the RU; or the N1 objects include an object of a CU, an object of a DU, or an object of an RU, and the N2 objects include an object of a cloud resource corresponding to the CU, an object of a cloud resource corresponding to the DU, or an object of a cloud resource corresponding to the RU.

In a design, the N objects include N1 obj ects, N2 obj ects, and N3 obj ects, N1, N2, and N3 are all positive integers, and a sum of N1, N2 and N3 is equal to N, where the N1 objects include an object of a CU, the N2 objects include an object of a DU, and the N3 objects include an object of an RU.

According to a fourth aspect, an apparatus is provided. For beneficial effects, refer to the descriptions of the first aspect. The apparatus may be a first network element, an apparatus configured in the first network element, or an apparatus that can be used in match with the first network element. The first network element may be a CU, a DU, an RU, an SMOF, or the like.

In a design, the apparatus includes units that perform the method/operation/steps/action described in the first aspect in a one-to-one correspondence, and the units may be hardware circuits, or may be software, or may be implemented by hardware circuits in combination with software. For example, the apparatus may include a processing unit and a transceiver unit, and the processing unit and the transceiver unit may perform corresponding functions in any design example of the first aspect. Specifically:

The processing unit is configured to determine alarm information of N objects, where N is an integer greater than or equal to 2. The processing unit is further configured to determine a root cause failure of the alarm information of the N objects based on an object association relationship, where the root cause failure is alarm information of M objects in the N objects, and M is a positive integer less than or equal to N. The transceiver unit is configured to receive corresponding information from another network element.

For a specific execution process of the processing unit and the transceiver unit, refer to the descriptions of the first aspect. Details are not described herein again.

In another design, the apparatus includes a processor, configured to implement the method described in the first aspect. The apparatus may further include a memory, configured to store instructions and/or data. The memory is coupled to the processor, and the processor may implement the method described in the first aspect by executing the program instructions stored in the memory. For example, the apparatus includes:
a memory, configured to store the program instructions; and
a processor, configured to: determine alarm information of N objects, where N is an integer greater than or equal to 2; and determine a root cause failure of the alarm information of the N objects based on an object association relationship, where the root cause failure is alarm information of M objects in the N objects, and M is a positive integer less than or equal to N.

For a specific execution process of the processor, refer to the descriptions of the first aspect. Details are not described again.

According to a fifth aspect, an apparatus is provided. For beneficial effects, refer to the descriptions of the second aspect. The apparatus may be a second network element, an apparatus configured in the second network element, or an apparatus that can be used in match with the second network element. The second network element may be a cloud resource Cloud, an RU, a DU, or the like.

In a design, the apparatus includes units that perform the method/operation/steps/action described in the second aspect in a one-to-one correspondence, and the units may be hardware circuits, or may be software, or may be implemented by hardware circuits in combination with software. For example, the apparatus includes a transceiver unit. Optionally, the apparatus may further include a processing unit. The communication unit and the transceiver unit may perform corresponding functions in any design example of the second aspect. Specifically:

The communication unit is configured to send alarm information of N2 objects to a first network element, where the alarm information is first-type alarm information; and for the N2 objects, first-type alarm information of each object includes at least one of the following: an identifier of the object, an identifier of a second network element, or an identifier of a network element associated with the second network element, where N2 is a positive integer.

Optionally, the processing unit is configured to determine the alarm information of the N2 objects.

For specific execution processes of the transceiver unit and the processing unit, refer to the descriptions of the second aspect. Details are not described herein again.

In another design, the apparatus includes a processor, configured to implement the method described in the second aspect. The apparatus may further include a memory, configured to store a program and/or instructions. The memory is coupled to the processor, and the processor may implement the method in the second aspect when executing the program instructions stored in the memory. The apparatus may further include a communication interface, and the communication interface may be used by the apparatus to communicate with another device. For example, the communication interface may be a transceiver, a circuit, a bus, a module, a pin, or another type of communication interface. The apparatus includes:
a memory, configured to store the program instructions;
a processor, configured to determine alarm information of N objects; and
a communication interface, configured to send alarm information of N2 objects to a first network element, where the alarm information is first-type alarm information; and for the N2 objects, first-type alarm information of each object includes at least one of the following: an identifier of the object, an identifier of a second network element, or an identifier of a network element associated with the second network element, where N2 is a positive integer.

For specific execution processes of the processor and the communication interface, refer to the descriptions of the second aspect. Details are not described herein again.

According to a sixth aspect, an apparatus is provided. For beneficial effects, refer to the descriptions of the third aspect. The apparatus may be a third network element, an apparatus configured in the third network element, or an apparatus that can be used in match with the third network element. The third network element may be an SMOF or the like.

In a design, the apparatus includes units that perform the method/operation/steps/action described in the third aspect in a one-to-one correspondence, and the units may be hardware circuits, or may be software, or may be implemented by hardware circuits in combination with software. For example, the apparatus includes a transceiver unit. Optionally, the apparatus may further include a processing unit. The communication unit and the transceiver unit may perform corresponding functions in any design example of the third aspect. Specifically:

The transceiver unit is configured to receive first indication information, where the first indication information indicates a root cause failure of alarm information of N objects, where the root cause failure is alarm information of M objects in the N objects, N is a positive integer greater than or equal to 2, and M is a positive integer less than or equal to N.

Optionally, the processing unit is configured to process the first indication information.

For specific execution processes of the transceiver unit and the processing unit, refer to the descriptions of the third aspect. Details are not described herein again.

In another design, the apparatus includes a processor, configured to implement the method described in the third aspect. The apparatus may further include a memory, configured to store a program and/or instructions. The memory is coupled to the processor, and the processor may implement the method in the third aspect when executing the program instructions stored in the memory. The apparatus may further include a communication interface, and the communication interface may be used by the apparatus to communicate with another device. For example, the communication interface may be a transceiver, a circuit, a bus, a module, a pin, or another type of communication interface. The apparatus includes:
a memory, configured to store the program instructions;
a communication interface, configured to receive first indication information, where the first indication information indicates a root cause failure of alarm information of N objects, where the root cause failure is alarm information of M objects in the N objects, N is a positive integer greater than or equal to 2, and M is a positive integer less than or equal to N; and
a processor, configured to process the first indication information.

For specific execution processes of the communication interface and the processor, refer to the descriptions of the third aspect. Details are not described herein again.

According to a seventh aspect, a computer-readable storage medium is provided, including instructions. When the instructions are run on a computer, the computer is enabled to perform the method in the first aspect, the second aspect, or the third aspect.

According to an eighth aspect, a chip system is provided. The chip system includes a processor, and may further include a memory, configured to implement the method in the first aspect, the second aspect, or the third aspect. The chip system may be formed by a chip, or may include a chip and another discrete device.

According to a ninth aspect, a computer program product is provided, including instructions. When the instructions are run on a computer, the computer is enabled to perform the method in the first aspect, the second aspect, or the third aspect.

According to a tenth aspect, a system is provided. The system includes the apparatus in the fourth aspect, the apparatus in the fifth aspect, and the apparatus in the sixth aspect.

### BRIEF DESCRIPTION OF DRAWINGS

FIG. 1 is a schematic diagram of a communication system according to an embodiment of this disclosure;
FIG. 2 is a diagram of an architecture of an O-RAN according to this disclosure;
FIG. 3 is a flowchart of determining a root cause failure according to this disclosure;
FIG. 4 is a schematic diagram of reporting alarm information according to this disclosure; and
FIG. 5 and FIG. 6 are schematic diagrams of structures of apparatuses according to this disclosure.

### DESCRIPTION OF EMBODIMENTS

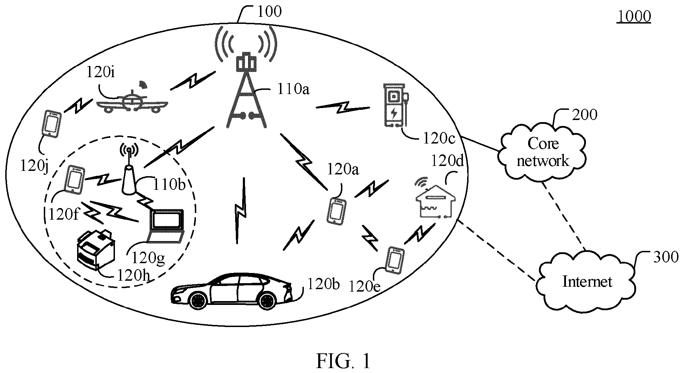

FIG. 1 is a schematic diagram of an architecture of a communication system 1000 to which this disclosure can be applied. As shown in FIG. 1, the communication system includes a radio access network 100 and a core network 200. Optionally, the communication system 1000 may further include the Internet 300. The radio access network 100 may include at least one access network device (for example, 110a and 110b in FIG. 1), and may further include at least one terminal device (for example, 120a to 120j in FIG. 1). The terminal device is connected to the access network device in a wireless manner, and the access network device is connected to the core network in a wireless or wired manner. A core network device and the access network device may be independent different physical devices, or a function of the core network device and a logical function of the access network device may be integrated into a same physical device, or a part of functions of the core network device and a part of functions of the access network device may be integrated into a physical device. The terminal devices may be connected to each other, and the access network devices may be connected to each other in a wired or wireless manner. FIG. 1 is only a schematic diagram. The communication system may further include another network device, for example, may further include a wireless relay device and a wireless backhaul device, which are not shown in FIG. 1.

The access network device may be a base station (base station), an evolved NodeB (evolved NodeB, eNodeB), a transmission reception point (transmission reception point, TRP), a next generation NodeB (next generation NodeB, gNB) in a 5^{th} generation (5^{th} generation, 5G) mobile communication system, an access network device in an open radio access network (open radio access network, O-RAN), a next generation NodeB in a 6^{th} generation (6^{th} generation, 6G) mobile communication system, a base station in a future mobile communication system, an access node in a wireless fidelity (wireless fidelity, Wi-Fi) system, or the like; or may be a module or a unit that implements a part of functions of the base station, for example, may be a central unit (central unit, CU), a distributed unit (distributed unit, DU), a central unit control plane (CU control plane, CU-CP) module, or a central unit user plane (CU user plane, CU-UP) module. The access network device may be a macro base station (for example, 110a in FIG. 1), or may be a micro base station or an indoor station (for example, 110b in FIG. 1), or may be a relay node, a donor node, or the like. A specific technology and a specific device form used by the access network device are not limited in this disclosure.

In this disclosure, an apparatus configured to implement a function of the access network device may be an access network device. Alternatively, the apparatus may be an apparatus that can support the access network device in implementing the function, for example, a chip system, a hardware circuit, a software module, or a hardware circuit and a software module, and the apparatus may be installed in the access network device or may be used in match with the access network device. In this disclosure, the chip system may be formed by a chip, or may include a chip and another discrete device. For ease of description, the following describes the technical solutions provided in this disclosure by using an example in which the apparatus configured to implement a function of the access network device is an access network device, and the access network device is a base station.

### (1) Protocol layer structure

Communication between the access network device and the terminal device complies with a protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

Optionally, a protocol layer structure between the access network device and the terminal device may further include an artificial intelligence (artificial intelligence, AI) layer, for transmitting data related to an AI function.

### (2) Central unit (central unit, CU) and distributed unit (distributed unit, DU)

The access network device may include the CU and the DU. A plurality of DUs may be centrally controlled by one CU. For example, an interface between the CU and the DU may be referred to as an F1 interface. A control plane (control panel, CP) interface may be F1-C, and a user plane (user panel, UP) interface may be F 1-U. A specific name of each interface is not limited in this disclosure. The CU and the DU may be classified based on protocol layers of a wireless network. For example, functions of a PDCP layer and protocol layers above the PDCP layer are set in the CU, and functions of protocol layers below the PDCP layer (for example, an RLC layer and a MAC layer) are set in the DU. For another example, functions of the protocol layers above the PDCP layer are set in the CU, and functions of the PDCP layer and the protocol layers below the PDCP layer are set in the DU. This is not limited.

The foregoing division of the processing functions in the CU and the DU based on the protocol layers is merely an example, and may also be division in another manner. For example, the CU or the DU may be divided into functions of more protocol layers. For another example, the CU or the DU may be further divided into a part of processing functions of the protocol layers. In a design, a part of functions of the RLC layer and functions of protocol layers above the RLC layer are set in the CU, and remaining functions of the RLC layer and functions of protocol layers below the RLC layer are set in the DU. In another design, functions of the CU or the DU may be further divided based on a service type or another system requirement, for example, divided based on a delay. A function with processing time that needs to meet a delay requirement is set in the DU, and a function with processing time that does not need to meet the delay requirement is set in the CU. In another design, the CU may alternatively have one or more functions of the core network. For example, the CU may be disposed on a network side to facilitate centralized management. In another design, a radio unit (radio unit, RU) of the DU is remotely disposed. Optionally, the RU may have a radio frequency function.

Optionally, the DU and the RU may be divided at a physical layer (physical layer, PHY). For example, the DU may implement a higher-layer function of the PHY layer, and the RU may implement a lower-layer function of the PHY layer. When used for sending, functions of the PHY layer may include at least one of the following: cyclic redundancy check (cyclic redundancy check, CRC) code adding, channel encoding, rate matching, scrambling, modulation, layer mapping, precoding, resource mapping, physical antenna mapping, or radio frequency sending functions. When used for receiving, the functions of the PHY layer may include at least one of the following: CRC check, channel decoding, rate de-matching, descrambling, demodulation, layer de-mapping, channel detection, resource de-mapping, physical antenna de-mapping, or radio frequency receiving functions. The higher-layer functions of the PHY layer may include a part of the functions of the PHY layer. For example, the part of functions are closer to the MAC layer. The lower-layer functions of the PHY layer may include another part of the functions of the PHY layer. For example, the another part of functions are closer to the radio frequency function. For example, the higher-layer functions of the PHY layer may include CRC code adding, channel encoding, rate matching, scrambling, modulation, and layer mapping, and the lower-layer functions of the PHY layer may include precoding, resource mapping, physical antenna mapping, and radio frequency sending functions. Alternatively, the higher-layer functions of the PHY layer may include CRC code adding, channel encoding, rate matching, scrambling, modulation, layer mapping, and precoding, and the lower-layer functions of the PHY layer may include resource mapping, physical antenna mapping, and radio frequency sending functions. For example, the higher-layer functions of the PHY layer may include CRC check, channel decoding, rate de-matching, decoding, demodulation, and layer de-mapping, and the lower-layer functions of the PHY layer may include channel detection, resource de-mapping, physical antenna de-mapping, and radio frequency receiving functions. Alternatively, the higher-layer functions of the PHY layer may include CRC check, channel decoding, rate de-matching, decoding, demodulation, layer de-mapping, and channel detection, and the lower-layer functions of the PHY layer may include resource de-mapping, physical antenna de-mapping, and radio frequency receiving functions.

For example, the functions of the CU may be implemented by one entity, or may be implemented by different entities. For example, the functions of the CU may be further divided. In other words, a control plane and a user plane are separated and implemented by different entities: a control plane CU entity (namely, a CU-CP entity) and a user plane CU entity (namely, a CU-UP entity). The CU-CP entity and the CU-UP entity may be coupled to the DU to jointly implement the function of the access network device.

Optionally, any one of the DU, the CU, the CU-CP, the CU-UP, and the RU may be a software module, a hardware structure, or a software module and a hardware structure. This is not limited. Existence forms of different entities may be different, and are not limited. For example, the DU, the CU, the CU-CP, and the CU-UP are software modules, and the RU is a hardware structure. These modules and methods performed by the modules also fall within the protection scope of this disclosure.

In a possible implementation, the access network device includes the CU-CP, the CU-UP, the DU, and the RU. For example, an execution body of this disclosure includes the DU, or includes the DU and the RU, or includes the CU-CP, the DU, and the RU, or includes the CU-UP, the DU, and the RU. This is not limited. The method performed by each module also falls within the protection scope of this disclosure.

The terminal device may also be referred to as a terminal, user equipment (user equipment, UE), a mobile station, a mobile terminal device, or the like. The terminal device may be widely used for communication in various scenarios, for example, including but not limited to at least one of the following scenarios: device-to-device (device-to-device, D2D), vehicle-to-everything (vehicle to everything, V2X), machine-type communication (machine-type communication, MTC), internet of things (internet of things, IoT), virtual reality, augmented reality, industrial control, autonomous driving, telemedicine, smart grid, smart furniture, smart office, smart wearable, smart transportation, smart city, or the like. The terminal device may be a mobile phone, a tablet computer, a computer with a wireless transceiver function, a wearable device, a vehicle, a drone, a helicopter, an airplane, a ship, a robot, a robotic arm, a smart home device, or the like. A specific technology and a specific device form used by the terminal device are not limited in this disclosure.

In this disclosure, an apparatus configured to implement a function of the terminal device may be a terminal device. Alternatively, the apparatus may be an apparatus that can support the terminal device in implementing the function, for example, a chip system, a hardware circuit, a software module, or a hardware circuit and a software module, and the apparatus may be installed in the terminal device or may be used in match with the terminal device. For ease of description, the following describes the technical solutions provided in this disclosure by using an example in which the apparatus configured to implement a function of the terminal device is a terminal device, and the terminal device is UE.

Abase station and the terminal device may be fixed or movable. The base station and/or the terminal device may be deployed on land, including indoor or outdoor, handheld or in-vehicle; may be deployed on water; or may be deployed on an aircraft, a balloon, or a satellite in the air. Application scenarios of the base station and the terminal device are not limited in this disclosure. The base station and the terminal device may be deployed in a same scenario or in different scenarios. For example, the base station and the terminal device are both deployed on land; or the base station is deployed on land, the terminal device is deployed on water. Examples are not provided one by one.

Roles of the base station and the terminal device may be relative. For example, a helicopter or drone 120i in FIG. 1 may be configured as a mobile base station, and for a terminal device 120j accessing the radio access network 100 through the 120i, the terminal device 120i is the base station; however, for a base station 110a, the 120i is the terminal device. In other words, communication between the 110a and the 120i is performed by using a wireless air interface protocol. The communication between the 110a and the 120i may alternatively be performed by using an interface protocol between the base stations. In this case, for the 110a, the 120i is also the base station. Therefore, both the base station and the terminal device may be collectively referred to as communication apparatuses, the 110a and the 110b in FIG. 1 may be referred to as communication apparatuses having a base station function, and the 120a to the 120j in FIG. 1 may be referred to as communication apparatuses having a terminal device function.

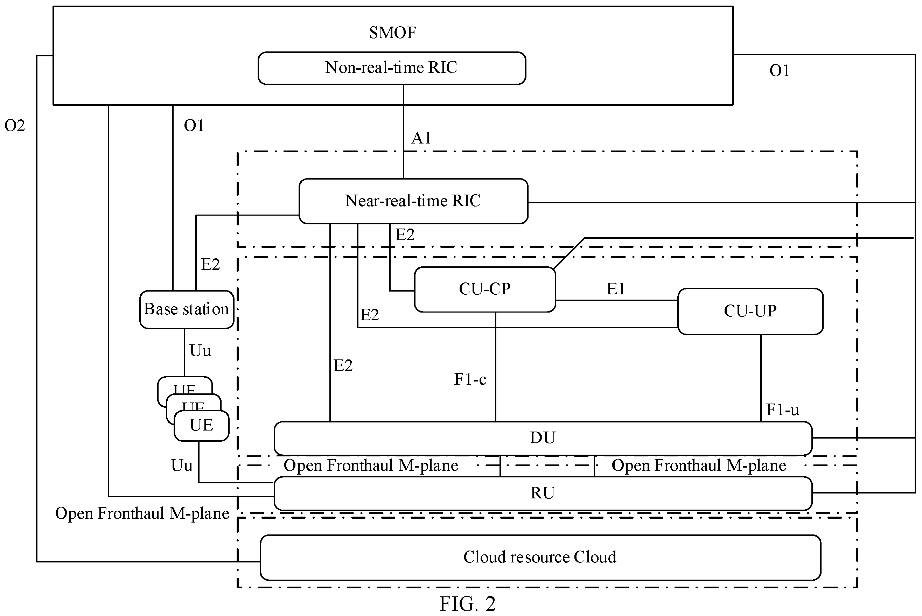

In a design, as shown in FIG. 2, in an O-RAN architecture, a traditional base station is split into different components such as a cloud resource (Cloud), an RU, a DU, a CU-CP, a CU-UP, an access network intelligent controller (RAN intelligent controller, RIC), and a service management and orchestration framework (service management and orchestration framework, SMOF). Functions of the components are as follows.

SMOF: The SMOF provides a service-based framework to support network operation and management. Optionally, the SMOF includes operation, administration and maintenance (operation, administration and maintenance, OAM) of a cloud infrastructure (for example, a cloud resource) and OAM of the base station.

RIC: The RIC may refer to a software-defined network (software-defined network, SDN), introduce intelligent scheduling, implement policy and execution separation, and the like. The RIC is configured to implement artificial intelligence. The RICs are classified into near-real-time (near-real-time, Near-RT) RICs and non-real-time (non-real-time, Non-RT) RICs. The near-real-time RIC is an O-RAN near-real-time RAN intelligent controller, and implements near-real-time control and optimization of O-RAN elements and resources through fine-grained data collection and actions of an E2 interface. The non-real-time RIC is an O-RAN non-real-time RAN intelligent controller, and implements a logical function of non-real-time control and optimization of RAN elements and resources, an artificial intelligence (artificial intelligence, AI) or machine learning (machine learning, ML) workflow including model training and update, and policy-based application and function guidance of the near-real-time RIC. Optionally, in the example in FIG. 2, the non-real-time RIC is disposed in the SMOF.

Cloud resource Cloud: The O-RAN Alliance defines the cloud resource Cloud as a cloud computing platform consisting of a collection of physical infrastructure nodes that meet an O-RAN requirement, hosting related O-RAN functions, supporting a software component and an appropriate management and orchestration function.

For the RU, the DU, the CU-CP, the CU-UP, and the like, refer to the descriptions in FIG. 1, and details are not described again. Optionally, in the O-RAN architecture, the RU, the DU, and the Cloud may be respectively referred to as an open RU (open RU, O-RU), an open DU (open DU, O-DU), an open Cloud (open Cloud, O-Cloud), or the like.

In a design, each component in the base station reports alarm information to a network management system of a carrier when identifying a failure, for example, identifying a failure by using software. The network management system of the carrier may be a network management system (network management system, NMS). A monitoring personnel of the carrier judges and analyzes the alarm information, and distribute tasks for failures that need to be rectified through service tickets. Because in the O-RAN architecture, there is an association relationship between different components, a failure of a component may cause a plurality of components to report alarm information. If a service ticket is dispatched for each piece of alarm information, a workload of monitoring and maintenance personnel significantly increases, and operation and maintenance costs are high. Therefore, how to determine a root cause failure of a plurality of pieces of alarm information is a problem worth studying.

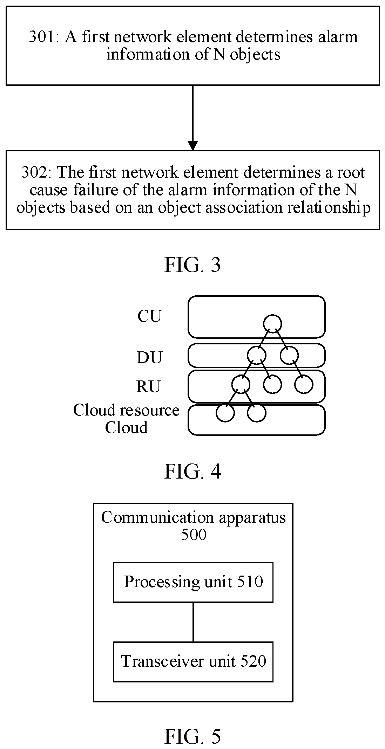

This disclosure provides a root cause failure determining method. In the method, when a plurality of pieces of alarm information are determined, a root cause failure may be determined from the plurality of pieces of alarm information, where the root cause failure is one or more pieces of alarm information in the plurality of pieces of alarm information. The service ticket is dispatched for alarm information of the root cause failure, and no service ticket is dispatched for alarm information of a non-root cause failure. This reduces the workload of the monitoring and maintenance personnel and reduces the operation and maintenance costs. In the following descriptions, an example in which the method of this disclosure is applied to a base station of the O-RAN architecture is used for description, and this disclosure is not limited thereto. For example, the method in this disclosure may be further applied to a device other than the O-RAN base station, for example, a core network device or a terminal device, to determine the root cause failure. As shown in FIG. 3, this disclosure provides a procedure of a root cause failure determining method, including at least the following steps.

Step 301: A first network element determines alarm information of N objects, where N is an integer greater than or equal to 2.

Step 302: The first network element determines a root cause failure of the alarm information of the N objects based on an object association relationship.

The root cause failure is alarm information of M objects in the N objects, and M is a positive integer less than or equal to N. Alternatively, the descriptions are as follows: A root cause failure of alarm information of N-M objects is the alarm information of the M objects. For example, a value of N is 3, and the first network element determines alarm information of three objects. It is determined, based on an object association relationship, that there is an association relationship among the three objects. For example, there is an association relationship among a network element CU of an object 1, a network element DU of an object 2, and a network element RU of an object 3. It is determined that alarm information of the object 3 of the RU is a root cause failure of alarm information of the object 1 of the CU and alarm information of the object 2 of the DU. In other words, a failure of the RU causes the CU and the DU to generate the alarm information. In this disclosure, for the root cause failure, for example, the alarm information of the object 3 of the RU is reported to a network management system of a carrier, and the network management system of the carrier dispatches service tickets to perform corresponding maintenance. For alarm information other than the root cause failure, for example, the alarm information of the object 2 of the DU and the alarm information of the object 1 of the CU are no longer reported to the network management system of the carrier, and no service ticket is dispatched, to reduce network operation and maintenance costs. Alternatively, the value of N is 5, and the first network element determines alarm information of five objects. The first network element determines two association relationship sets based on an object association relationship. One association relationship set includes three objects, and the other association relationship set includes two objects. A root cause failure is determined based on the association relationship set including three objects. The other root cause failure is determined based on the association relationship set including two objects. In this example, a value of M is 2.

In this disclosure, the object association relationship may be preconfigured or specified in a protocol. For example, a third network element may configure the object association relationship for the first network element through a configuration file, a configuration message, or the like. For example, the third network element may send the configuration file, the configuration message, or the like to the first network element, where the configuration file or the configuration message indicates the object association relationship. The first network element may obtain the object association relationship through the configuration file or the configuration message. For example, the object association relationship configured by the third network element through the configuration file or the configuration message is an association relationship among a CU, a DU, and an RU. Alternatively, the third network element may configure object association relationships through a plurality of configuration files or a plurality of configuration messages. The first network element combines the configured plurality of object association relationships to form a final object association relationship. For example, the third network element sends a first configuration file or a first configuration message to the first network element, where the first configuration file or the first configuration message indicates a first object association relationship. The third network element sends a second configuration file or a second configuration message to the first network element, where the second configuration file or the second configuration message is used to configure a second object association relationship. The first network element determines the object association relationship based on the first object association relationship and the second object association relationship. For example, the first object association relationship is an association relationship between the CU and the DU, and the second object association relationship is an object association relationship between the DU and the RU. An association relationship among the CU, the DU, and the RU is finally determined based on the association relationships between two units. Optionally, the first network element may be the CU, the DU, the RU, or the like, and the third network element that configures the object association relationship for the first network element may be an SMOF.

In the descriptions of this disclosure, an object may be a network element. For example, the first network element is the SMOF, and the SMOF may receive alarm information from at least two of the following network elements: the RU, the DU, the CU, or the like. For example, the SMOF receives alarm information from the CU, the DU, and the RU. If there is an association relationship among the RU, the DU, and the CU, alarm information of the RU is considered as a root cause failure of alarm information of the DU and the CU. The SMOF can report the alarm information of the RU to the network management system of the carrier, and no longer reports the alarm information of the CU and the DU to the carrier, to reduce the network operation and maintenance costs. Alternatively, the SMOF receives the alarm information from the CU and the DU. When there is an association relationship between the CU and the DU, it is considered that the alarm information of the DU is a root cause failure of the alarm information of the CU. The SMOF reports the alarm information of the DU to the network management system of the carrier, and no longer reports the alarm information of the CU, to reduce the network operation and maintenance costs. Alternatively, the SMOF may receive the alarm information from the DU and the RU. When there is an association relationship between the DU and the RU, it is considered that the alarm information of the RU is a root cause failure of the alarm information of the DU. The SMOF reports the alarm information of the RU to the carrier, and no longer reports the alarm information of the DU, to reduce the network operation and maintenance costs. Alternatively, the SMOF may receive the alarm information from the CU and the RU. Because there is an association relationship between the CU and the DU, and there is an association relationship between the DU and the RU, when there is an indirect association relationship between the CU and the RU, it may be considered that the alarm information of the RU is the root cause failure of the alarm information of the CU, and the alarm information of the RU may be reported to the network management system of the carrier. It should be noted that in some scenarios, an RU failure may not cause a corresponding DU failure, but may cause a corresponding CU failure. Therefore, in some scenarios, the RU and the CU may report the alarm information at the same time, but the DU does not report the alarm information.

In this disclosure, that there is an association relationship between at least two of the RU, the DU, and the CU may include the following meaning: One CU may centrally manage a plurality of DUs, and there is an association relationship between the CU and the plurality of DUs managed by the CU. One DU may centrally manage a plurality of RUs, and there is an association relationship between the DU and the plurality of RUs managed by the DU. The DU serves as a bridge in the middle, and there is also an association relationship between the CU and the RU. For example, if a target CU manages a target DU, and the target DU manages a target RU, there is an association relationship between the target CU and the target RU. It is clear that the foregoing descriptions are described by using an example of an association relationship between any two items of the RU, the DU, and the CU. In this disclosure, the association relationship may be an association relationship of more than two items. For example, the association relationship may be an association relationship among the RU, the DU, and the CU. Similar to the foregoing descriptions, if the target CU manages the target DU, and the target DU manages the target RU, it is considered that there is an association relationship among the target CU, the target DU, and the target RU. For example, if a CU 1 manages a DU 11 to a DU 13, and the DU 11 manages an RU 111 to an RU 113, it is considered that there is an association relationship among the CU 1, the DU 11, and the RU 11. For example, at a moment or in a time period, the CU 1, the DU 11, and the RU 111 separately report alarm information to the SMOF. Because there is an association relationship among the RU, the DU, and the CU that report the alarm information, it is considered that alarm information of the RU 111 is a root cause failure of alarm information of the DU 11 and the CU 1. For example, the alarm information reported by the RU may be an RU function exception alarm, the alarm information reported by the DU may be a DU cell unavailable alarm, and the alarm information reported by the CU may be a CU cell unavailable alarm.

Alternatively, in another description of this disclosure, an object may be an object of the network element. For example, in the CU, the DU, or the RU, different objects may be obtained through division based on different implemented functions. For example, in the DU, an object that manages a function of a cell may be referred to as an object of the DU. In the CU, an object that manages a function of a cell is referred to as an object of the CU. Different objects have different identifiers. The identifier may be allocated by the SMOF to the object, allocated by another network element, preset, specified in a protocol, or the like. This is not limited. For another example, a cloud resource Cloud includes a computing resource pool, a storage resource pool, and a network resource pool. The computing resource pool includes a plurality of computing objects, and each computing object is corresponding to a different identifier. The storage resource pool includes a plurality of storage objects, and different objects also have different identifiers. The network resource pool includes a plurality of network resource objects.

In an O-RAN architecture, specific functions of the CU, the DU, and the RU may be implemented in the cloud resource Cloud. For example, the computing resource pool of the cloud resource Cloud includes 10 computing objects. Five computing objects implement a computing function of the RU, and the five computing objects may be referred to as computing objects of the RU. Three computing objects implement a computing function of the DU, and the three computing objects of the DU may be referred to as computing objects of the DU. Two computing objects implement a computing function of the RU, and the two computing objects may be referred to as computing objects of the RU. In this disclosure, there is an association relationship among the computing objects of the CU, the computing objects of the DU, and the computing objects of the RU, and a root cause failure may be determined based on the association relationship among the three. For example, the computing objects of the RU, the computing objects of the DU, and the computing objects of the CU all report alarm information. Because there is an association relationship among the RU, the DU, and the CU, it is determined that alarm information of the computing objects of the RU is a root cause failure of other alarm information. Subsequently, the SMOF reports only the alarm information of the computing objects of the RU to the network management system of the carrier, to reduce the operation and maintenance costs. It should be noted that, in the descriptions of this disclosure, there is an association relationship among an object of the RU, an object of the DU, and an object of the CU, but there is no association relationship between different objects of the RU, different objects of the DU, or different objects of the CU. In the following descriptions, an example in which an object is an object of a corresponding network element continues to be described.

Optionally, in addition to the object association relationship, the root cause failure of the alarm information of the N objects may be further determined based on generation time of the alarm information of the N objects. In other words, the root cause failure of the alarm information of the N objects may be determined based on the object association relationship and the generation time of the alarm information of the N objects. Alarm information of each object may carry a timestamp, and generation time of the alarm information of each object may be determined based on the timestamp of the alarm information of each object.

In a design, X association relationship sets may be determined based on the object association relationship. The association relationship set includes at least one object with an association relationship. Quantities of objects with an association relationship included in different association relationship sets in the X association relationship sets are the same or different. This is not limited. Optionally, for any association relationship set of the X association relationship sets, one or more root cause failures may be determined. It is defined in the foregoing step 302 that in this disclosure, M root cause failures may be determined in total. A sum of quantities of root cause failures determined based on the X association relationship sets is less than or equal to M.

For example, the object association relationship includes an association relationship among the CU, the DU, and the RU, and an association relationship between the CU and a cloud resource Cloud. An object of the CU, an object of the DU, an object of the RU, and an object of a cloud resource Cloud corresponding to the CU all report alarm information. In this case, based on the foregoing object association relationship, the plurality of objects that report the alarm information may be divided into two association relationship sets. One association relationship set includes the object of the CU, the object of the DU, and the object of the RU, where there is an association relationship among the object of the CU, the object of the DU, and the object of the RU. The other association relationship set includes the object of the CU and the object of the cloud resource Cloud corresponding to the CU, where there is an association relationship between the object of the CU and the object of the cloud resource Cloud corresponding to the CU.

For any association relationship set i in the X association relationship sets, where i is a positive integer greater than or equal to 1 and less than or equal to X, the following operations are performed: L objects in the association relationship set are determined based on generation time of alarm information of objects included in the association relationship set i, where a generation time difference of alarm information of the L objects is less than (or less than or equal to) a threshold; and a root cause failure of the alarm information of the L objects is determined, where the root cause failure is alarm information of at least one of the L objects, and L is a positive integer. Alternatively, the descriptions are as follows: For any association relationship set i, the generation time of the alarm information of the objects included in the association relationship set is obtained; objects of which generation time of alarm information meets a condition are determined in the objects included in the association relationship set i, where the objects that meet the condition are the L objects; and a root cause failure is determined in the L objects. The foregoing example is still used. The association relationship set includes the object of the CU, the object of the DU, and the object of the RU. A generation time difference between alarm information of the object of the CU and alarm information of the object of the DU is less than the threshold (meeting the condition), a generation time difference between alarm information of the object of the RU and the alarm information of the object of the CU and/or the alarm information of the DU object is greater than the threshold (not meeting the condition), and the determined L objects are the object of the CU and the object of the DU. It is determined that the alarm information of the object of the DU is a root cause failure of the alarm information of the object of the CU. In this disclosure, for one association relationship set, one root cause failure, a plurality of root cause failures, or the like may be determined. This is not limited.

In another design, P association relationship sets may be determined based on the object association relationship and the generation time of the alarm information of the N objects. Different association relationship sets of the P association relationship sets include a same quantity or different quantities of objects. This is not limited. P is an integer greater than or equal to 1. Optionally, for any association relationship set of the P association relationship sets, at least one root cause failure may be determined. It is defined in the foregoing step 302 that, for the alarm information of the N objects, M root cause failures are determined in total. A sum of quantities of root cause failures determined in the P association relationship sets is M.

Different from the foregoing design, in the foregoing design, an association relationship set is first determined based on the object association relationship. Then, the L objects of which the generation time of the alarm information meets the condition are determined in the association relationship set based on generation time of different alarm information. In this design, when the association relationship set is determined, generation time of alarm information of different objects are considered. In other words, in this design, generation time of alarm information corresponding to objects included in the association relationship set all meets the condition. The foregoing example is still used. The object of the CU, the object of the DU, the object of the RU, and the object of the cloud resource Cloud corresponding to the CU all report the alarm information. The object association relationship includes an association relationship among the CU, the DU, and the RU, and an association relationship between the CU and the cloud resource Cloud corresponding to the CU. Therefore, in this disclosure, the object of the CU, the object of the DU, and objects of the RU are grouped into one set, and the object of the CU and the object of the cloud resource Cloud corresponding to the CU are grouped into another set. For the set formed by the object of the CU, the object of the DU, and the object of the RU, generation time of the alarm information corresponding to the object of the CU, the object of the DU, and the object of the RU is separately obtained. Whether the generation time of the alarm information of the three meets the condition (for example, a generation time difference of the alarm information is less than the threshold) is determined. If the condition is met, the original set is retained. Otherwise, an object of which generation time of alarm information does not meet the condition is removed from the original set to form an association relationship set. For example, if a generation time difference between the alarm information of the RU and the alarm information of the CU and/or the alarm information of the DU is greater than the threshold, the object of the RU is removed from the original set, and a determined association relationship set includes the object of the CU and the object of the DU. Optionally, a removed object, for example, the RU, in the association relationship set may form a separate set, and a root cause failure corresponding to the set is alarm information of an object included in the set, for example, the alarm information of the RU. The alarm information is separately reported to the network management system of the carrier. Alternatively, the descriptions are as follows: Alarm information of the removed object is directly reported to the network management system of the carrier, and the network management system of the carrier dispatches a corresponding service ticket.

For any one of the P association relationship sets, a root cause failure of alarm information of Q objects included in the association relationship set is determined, where Q is a positive integer, the root cause failure is alarm information of at least one of the Q objects, the Q objects have an association relationship, and a generation time difference of the alarm information of the Q objects with the association relationship is less than (or is less than or equal to) the threshold.

For example, one of the P association relationship sets includes the object of the CU, the object of the DU, and the object of the RU. Because there is an association relationship among the CU, the DU, and the RU, the CU manages the DU, and the DU manages the RU, it may be considered that the alarm information corresponding to the RU is a root cause failure of the alarm information corresponding to the CU and the DU.

In a design, an implementation of the foregoing step 301 is as follows: The first network element detects alarm information of N1 objects; and the first network element receives alarm information of N2 objects from a second network element, where both N1 and N2 are positive integers, and a sum of N1 and N2 is equal to N.

For example, the first network element is the CU, and the alarm information of the N1 objects detected by the first network element includes the alarm information of the N1 objects detected by the CU. The second network element is the DU, and the alarm information of the N2 objects sent by the DU to the CU includes at least one of the following: the alarm information of the object of the DU, the alarm information of the object of the RU, alarm information of an object of a cloud resource Cloud corresponding to the DU, or alarm information of an object of a cloud resource Cloud corresponding to the RU. Alternatively, the first network element is the DU, and the alarm information of the N1 objects detected by the first network element includes the alarm information of the N1 objects detected by the DU. The second network element is the RU, and the alarm information of the N2 objects sent by the RU to the DU includes at least one of the following: the alarm information corresponding to the RU, or alarm information of an object of a cloud resource Cloud corresponding to the RU. Alternatively, the first network element is the CU, the DU, or the RU, and the second network element is an object of a cloud resource Cloud corresponding to the first network element, or the like. For example, the first network element is the CU, the alarm information of the N1 objects detected by the first network element includes the alarm information of the N1 objects detected by the CU, and the cloud resource Cloud sends, to the CU, the alarm information of the N2 objects of a cloud resource Cloud corresponding to the CU.

Optionally, in this disclosure, the alarm information of the N2 objects sent by the second network element to the first network element is referred to as first-type alarm information, and the first-type alarm information includes at least one of the following: an object identifier, an identifier of the second network element, an identifier of a network element associated with the second network element, or the like.

For example, when there is a failure of N1 objects of the CU, the failure of the N1 objects may be identified by using software, and corresponding alarm information, namely, the alarm information of the N1 objects, is generated. The DU may collect the alarm information of the N2 objects, where the alarm information of the N2 objects includes at least one of the following: the alarm information of the object of the DU detected by the DU, the alarm information of the object of the RU collected from the RU, the alarm information of the object of the cloud resource Cloud corresponding to the RU and collected from the RU, the alarm information of the object corresponding to the DU collected from the cloud resource Cloud, or the like. The DU reports the alarm information of the N2 objects to the CU having an association relationship with the DU. The CU performs root cause analysis on the alarm information of the N1 objects and the alarm information of the N2 objects based on the object association relationship to determine a root cause failure. In this example, the alarm information of the N2 objects reported by the DU is referred to as the first-type alarm information. First-type alarm information that is of the object of the DU and reported by the DU includes at least one of the following: an identifier of the CU associated with the DU, a DU identifier, or the object identifier. For example, the first-type alarm information that is of the object of the DU and reported by the DU is: the CU identifier, the DU identifier, and the object identifier. First-type alarm information that is of the object of the RU and reported by the DU includes at least one of the following: the identifier of the CU associated with the DU, the DU identifier, an RU identifier, or the object identifier. For example, the first-type alarm information that is of the object of the RU and reported by the DU includes: the CU identifier, the DU identifier, the RU identifier, and the object identifier. It may be understood that the alarm information of the object of the RU is reported by the RU to the DU. This is discussed in the following two cases.

In a first design, the RU does not perceive the CU, or in other words, the RU knows a corresponding DU, but does not know a corresponding CU. The alarm information reported by the RU to the DU may include: the DU identifier, the RU identifier, and the object identifier. When receiving the alarm information reported by the RU, the DU adds the CU identifier to the alarm information of the RU based on a correspondence between the DU identifier and the CU identifier. First-type alarm information reported by the DU to the CU is: the CU identifier, the DU identifier, the RU identifier, and the object identifier. Alternatively, when receiving the alarm information of the RU, the DU does not process the alarm information, and directly uses the alarm information as the first-type alarm information, and reports the alarm information to the CU. In other words, the alarm information that is of the object of the DU and reported by the DU to the CU is: the DU identifier, the RU identifier, and the object identifier. In a design, an object association relationship stored in the CU is: the CU identifier and the DU identifier, and the DU identifier and the RU identifier. When the CU determines the root cause failure based on the object association relationship, the CU performs association processing twice based on the CU identifier and the DU identifier, and the DU identifier and the RU identifier as a key (KEY) for association. For example, an association relationship between the RU and the DU is determined based on the DU identifier and the RU identifier. Then, an association relationship between the DU and the CU is determined based on the CU identifier and the DU identifier. The association relationship among the CU, the DU, and the RU, namely, the CU identifier, the DU identifier, and the RU identifier, is finally determined. Alternatively, if the object association relationship stored in the CU is the CU identifier, the DU identifier, and the RU identifier, the CU performs association processing once based on the CU identifier, the DU identifier, and the RU identifier as the key for association, and directly determines the association relationship among the CU, the DU, and the RU.

In a second design, the RU may perceive the CU, or in other words, the RU knows a corresponding DU and CU. The alarm information reported by the RU to the DU may include: the CU identifier, the DU identifier, the RU identifier, and the object identifier. When receiving the alarm information reported by the RU, the DU forwards the alarm information as the first-type alarm information to the CU.

Optionally, in the foregoing procedure shown in FIG. 3, after the first network element determines the root cause failure, the method may further include: The first network element sends first indication information to the third network element, where the first indication information indicates the root cause failure of the alarm information of the N objects. For example, the first network element is a CU, a DU, or an RU. After determining the root cause failure by using the method in the foregoing procedure shown in FIG. 3, the CU, the DU, or the RU may send, to the third network element, indication information that indicates the root cause failure, where the third network element may be an SMOF or the like.

In another design, an implementation of the foregoing step 301 is as follows: The first network element receives alarm information from the second network element, where the alarm information includes alarm information of N1 objects; the first network element receives alarm information from the third network element, where the alarm information includes alarm information of N2 objects; and the first network element receives alarm information from a fourth network element, where the alarm information includes alarm information of N3 objects. N1, N2, and N3 are all positive integers, and a sum of the three is equal to N. Alarm information reported by the second network element, the third network element, and the fourth network element is referred to as second-type alarm information. The second-type alarm information includes at least one of the following: an object identifier, an identifier of a corresponding network element, a failure identifier, or a failure cause. For example, the first network element may be the SMOF, the second network element may be the CU, the third network element may be the DU, the fourth network element may be the RU, or the like.

In this disclosure, a cloud resource Cloud may report alarm information to the CU, the DU, the RU, or the like by using an existing interface. Alternatively, an interface is added between the cloud resource Cloud and the CU, the DU, or the RU, to report the alarm information. Alternatively, the cloud resource Cloud may report a part of content of the alarm information by using an existing interface, and report remaining content of the alarm information by using a newly added interface. This is not limited. The RU may report alarm information to the DU by using an existing interface, for example, an open (open) fronthaul (Fronthaul) interface. Alternatively, an interface may be added between the RU and the DU, to report the alarm information. The DU may report alarm information to the CU by using an existing interface, for example, an F1 interface, or an interface may be added between the DU and the CU, to report the alarm information. For alarm information reporting between the RU and the DU, or alarm information reporting between the DU and the CU, a part of content may be reported by using the newly added interface, and a remaining part of content of the alarm information may be reported by using the existing interface.

For example, a specific process thereof is described by using an example in which the first network element is the SMOF, and the second network element, the third network element, and the fourth network element are respectively the CU, the DU, and the RU. When detecting a failure of N1 objects of the CU, the CU may report alarm information of the N1 objects to the SMOF. The alarm information may be referred to as the second-type alarm information, and the second-type alarm information includes at least one of the following: the object identifier, the CU identifier, the failure identifier, the failure cause, or the like. For example, the CU reports alarm information of the N1 objects to the SMOF, and alarm information of each object of the N1 objects includes: the object identifier, the CU identifier, and the failure identifier. The failure identifier may implicitly indicate a failure cause. Similarly, when detecting a failure of N2 objects of the DU, the DU may report alarm information of the N2 objects to the SMOF, and alarm information of each of the N2 objects includes: the object identifier, the DU identifier, and the failure identifier, where the failure identifier may implicitly indicate the failure cause. A process in which the RU reports alarm information of the N3 objects to the SMOF is similar to a process in which the CU or the DU reports the alarm information to the SMOF, and details are not described again. In this disclosure, the SMOF may determine, based on an object association relationship, for example, an association relationship among the CU, the DU, and the RU, a root cause failure of alarm information reported by the CU, the DU, and the RU. In this disclosure, one CU may centrally control a plurality of DUs. There is an association relationship between the CU and a DU that is centrally controlled by the CU, and there is no association relationship between the CU and a DU other than the DU that is centrally controlled. One DU may centrally control a plurality of RUs. There is an association relationship between the DU and an RU that is centrally controlled by the DU, and there is no association relationship between the DU and an RU other than the RU that is centrally controlled. For example, if a CU 1 centrally controls a DU 11 to a DU 13, and the DU 11 centrally controls an RU 111 to an RU 113, there is an association relationship between the CU 1 and the DU 11 to the DU 13, and there is an association relationship between the DU 11 and the RU 111 to the RU 113. In this disclosure, if the CU 1 reports alarm information of N1 objects to the SMOF, the DU 11 reports alarm information of N2 objects to the SMOF, and the RU 113 reports alarm information of N3 objects to the SMOF, because there is an association relationship among the CU 1, the DU 11, and the RU 113, it may be determined that the alarm information of the N3 objects of the RU 113 is a root cause failure of the alarm information of the N2 objects of the DU 11 and the alarm information of the N1 objects of the CU 1.

It should be understood that, in the foregoing descriptions, an example in which the CU, the DU, or the RU reports the alarm information to the SMOF, and the SMOF determines the root cause failure is used for description. In addition, a cloud resource Cloud may further report alarm information to the SMOF, and the SMOF may determine a root cause failure of alarm information of the CU, the DU, the RU, or the cloud resource Cloud based on an association relationship. The foregoing example is still used. The CU 1, the DU 11, the RU 113, and the cloud resource Cloud separately report alarm information to the SMOF. Based on the foregoing analysis, there is an association relationship among the CU 1, the DU 11, and the RU 113, and it is designed that the alarm information reported by the cloud resource Cloud is alarm information of an object of the RU 113. The SMOF may determine that the alarm information of the cloud resource Cloud is a root cause failure of alarm information of the CU 1, the DU 11, and the RU 113.

In this disclosure, the CU, the DU, the RU, the cloud resource Cloud, or the like may report the alarm information to the SMOF by using an existing interface. For example, the alarm information is reported to the SMOF by using an O1 interface. Alternatively, an interface is added between the SMOF and the CU, the DU, the RU, or the cloud resource Cloud, and the alarm information is reported to the SMOF by using the newly added interface. Alternatively, a part of content of the alarm information is reported by using an existing standard interface, and another part of content is reported by using a newly added interface. This is not limited.

For example, as shown in FIG. 4, a failure of an object of a cloud resource Cloud corresponding to an RU is used as an example to provide a root cause failure determining process, and the process includes at least the following steps.

When detecting the failure of the object of the cloud resource Cloud corresponding to the RU, the cloud resource Cloud reports alarm information to the RU, where the alarm information is referred to as first-type alarm information, and the alarm information includes at least one of the following: an object identifier of the cloud resource Cloud, a cloud resource Cloud identifier, or an RU identifier. Optionally, the alarm information may further include a DU identifier and a CU identifier that are associated, or the like. The RU detects internal alarm information and determines, based on an association relationship between the RU and the object of the cloud resource Cloud corresponding to the RU, that the alarm information of the cloud resource Cloud is a root cause failure of alarm information of the RU. The RU reports the foregoing correlation analysis of the root cause failure to the SMOF by using the O1 interface.

The RU may send alarm information to the DU, where the alarm information includes the alarm information of the RU and the alarm information of the cloud resource Cloud. For content of the alarm information of the cloud resource Cloud, refer to the foregoing descriptions. The alarm information reported by the RU may be first-type alarm information, and includes an object identifier of the RU and a DU identifier corresponding to the RU. Optionally, when the RU can perceive the CU, the alarm information reported by the RU may further include a CU identifier corresponding to the RU. The DU determines, based on an association relationship between the RU and the DU and an association relationship between the RU and a failure of an object of the cloud resource Cloud, that the alarm information of the cloud resource Cloud is a root cause failure of the alarm information of the RU and alarm information of the DU. The DU reports the foregoing correlation analysis of the root cause failure to the SMOF by using the O1 interface.

The DU may send alarm information to the CU, where the alarm information includes the alarm information of the DU, the alarm information of the RU, and the alarm information of the cloud resource Cloud. For content of the alarm information of the RU and the alarm information of the cloud resource Cloud, refer to the foregoing descriptions. The alarm information of the DU includes at least one of the following: an identifier of the CU associated with the DU, the DU identifier, and an object identifier of the DU. When detecting an internal failure, the CU generates alarm information. The CU determines a root cause failure of the plurality of pieces of alarm information based on an object association relationship. The plurality of pieces of alarm information include alarm information detected by the CU, the received alarm information of the DU, the alarm information of the RU, and the alarm information of the cloud resource Cloud. It can be learned by performing correlation analysis on the alarm information that the alarm information of the CU is caused by the alarm information of the DU, the alarm information of the DU is caused by the alarm information of the RU, and the alarm information of the RU is caused by the alarm information of the cloud resource Cloud. The CU finally determines that the alarm information of the cloud resource Cloud is a root cause failure of the alarm information of the CU, the DU, and the RU. The CU reports the foregoing correlation analysis of the root cause failure to the SMOF by using the O1 interface.

For example, when receiving the correlation analysis of the root cause failure reported by the CU, the DU, the RU, or the like, the SMOF may report alarm information corresponding to the root cause failure to a network management system of a carrier, and the network management system of the carrier dispatches service tickets. Optionally, to determine the root cause failure more accurately, the SMOF may determine the root cause failure by itself as the following.

The cloud resource Cloud, the RU, the DU, the CU, or the like may further report alarm information separately detected by the cloud resource Cloud, the RU, the DU, or the CU to the SMOF, where the alarm information is referred to as second-type alarm information, and the second-type alarm information includes at least one of the following: an object identifier, an identifier of a corresponding network element, a failure identifier, a failure cause, or the like. For example, the alarm information reported by the cloud resource Cloud to the SMOF includes the object identifier of the cloud resource Cloud, a cloud resource Cloud identifier, the failure identifier, and the like. The alarm information reported by the RU to the SMOF includes the object identifier of the RU, the RU identifier, the failure identifier, and the like. The alarm information reported by the DU to the SMOF includes the object identifier of the DU, the DU identifier, the failure identifier, and the like. The alarm information reported by the CU to the SMOF includes an object identifier of the CU, the CU identifier, the failure identifier, and the like. The failure identifier may implicitly indicate a failure cause. When receiving the alarm information separately reported by the cloud resource Cloud, the RU, the DU, and the CU, the SMOF may obtain the object identifier of the cloud resource Cloud from the alarm information of the cloud resource Cloud, obtain the RU identifier from the alarm information of the RU, obtain the DU identifier from the alarm information of the DU, and obtain the CU identifier from the alarm information of the CU. It is determined, based on the object association relationship, whether there is an association relationship between the obtained object identifier of the cloud resource Cloud and the obtained RU identifier, between the obtained RU identifier and the obtained DU identifier, and between the obtained DU identifier and the obtained CU identifier. If all three association relationships exist, it can be determined that the alarm information of the cloud resource Cloud is the root cause failure of the alarm information of the RU, the DU, and the CU. The SMOF can report the alarm information of the cloud resource Cloud as the root cause failure to the network management system of the carrier, and the network management system of the carrier dispatches a service ticket for the root cause failure. For example, the alarm information reported by the SMOF to the network management system of the carrier may be second-type alarm information reported by each network element. For example, an example in which the root cause failure is the alarm information of the cloud resource Cloud is used, the alarm information reported by the SMOF to the network management system of the carrier includes at least one of the following: the object identifier of the cloud resource Cloud, the cloud resource Cloud identifier, the failure identifier, or the like. The failure identifier may implicitly indicate the failure cause, or the like.

For example, in an implementation, the SMOF may compare the root cause failures determined by the CU, the DU, and the RU with the root cause failure determined by the SMOF, to determine whether the root cause failures reported by the network elements are the same as the root cause failure determined by the SMOF. If the root cause failures reported by the network elements and the root cause failure determined by the SMOF are the same, the same root cause failure is reported to the SMOF; and if the root cause failures reported by the network elements and the root cause failure determined by the SMOF are different, the root cause failures reported by the network elements and the root cause failure determined by the SMOF are all reported to the network management system of the carrier. Alternatively, the SMOF may report the root cause failure determined by the SMOF to the network management system of the carrier based on a consideration of high accuracy of determining of the SMOF. It is clear that if accuracy of the root cause failures determined by the network elements is high, the SMOF may also report the root cause failures of the network elements to the network management system of the carrier. This is not limited.

In a design, the SMOF may learn and update the object association relationship in a manner of big data, AI, or the like. Therefore, accuracy of the root cause failure determined by the SMOF is high. For an association relationship between some alarm information, the root cause failure may not be determined by the CU, the DU, the DU, or the like. In this case, aggregation and unified processing may be performed by the SMOF to accurately determine the root cause failure. Optionally, the SMOF may further synchronously send an updated object association relationship to the CU, the DU, the RU, or the like.

It can be learned from the foregoing that, in this disclosure, the RU, the DU, the CU, or the like may report the root cause failure analysis of each of the RU, the DU, the CU, or the like to the SMOF. Optionally, the SMOF may alternatively determine the root cause failure based on the alarm information reported by the cloud resource Cloud, the RU, the DU, the CU, and the like. The root cause failure determining process of the SMOF may be used as a supplement to root cause failure determining of the RU, the DU, or the CU, to improve accuracy of determining the root cause failure.

To implement the functions in the foregoing methods, the first network element, the second network element, and the third network element include a corresponding hardware structure and/or a corresponding software module for performing each function. A person skilled in the art should easily be aware that units and method steps in the examples described with reference to this disclosure can be implemented in a form of hardware or a combination of hardware and computer software in this disclosure. Whether a function is executed in a manner of hardware or hardware driven by computer software depends on specific application scenarios and design constraint conditions of the technical solutions.

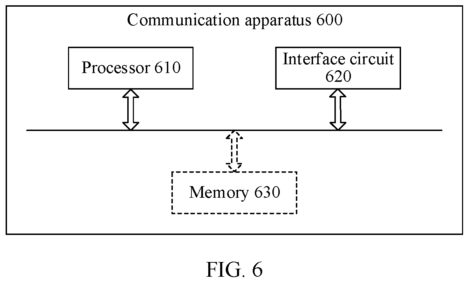

FIG. 5 and FIG. 6 are schematic diagrams of structures of possible apparatuses according to this disclosure. These communication apparatuses may be configured to implement functions of the first network element, the second network element, or the third network element in the foregoing methods, and therefore, can also achieve beneficial effects of the foregoing methods.

As shown in FIG. 5, a communication apparatus 500 includes a processing unit 510 and a transceiver unit 520. The communication apparatus can implement functions of the first network element, the second network element, or the third network element in the foregoing methods.

For example, when the communication apparatus 500 is configured to implement the function of the first network element in the foregoing methods, the processing unit 510 is configured to determine alarm information of N obj ects, where N is an integer greater than or equal to 2. The processing unit 510 is further configured to determine a root cause failure of the alarm information of the N objects based on an object association relationship, where the root cause failure is alarm information of M objects in the N objects, and M is a positive integer less than or equal to N. The transceiver unit 520 is configured to receive corresponding information from another network element.

For example, when the communication apparatus 500 is configured to implement the function of the second network element in the foregoing methods, the processing unit 510 is configured to determine alarm information of N2 objects, and the transceiver unit 520 is configured to send the alarm information of the N2 objects to the first network element, where the alarm information is referred to as first-type alarm information. For the N2 objects, first-type alarm information of each object includes at least one of the following: an identifier of the object, an identifier of the second network element, or an identifier of a network element associated with the second network element, where N2 is a positive integer.

For example, when the communication apparatus 500 is configured to implement a function of the third network element in the foregoing methods, the transceiver unit 520 is configured to receive first indication information, where the first indication information indicates a root cause failure of the alarm information of the N objects,
the root cause failure is the alarm information of the M objects in the N objects, N is a positive integer greater than or equal to 2, and M is a positive integer less than or equal to N. The processing unit 510 is configured to process the root cause failure of the alarm information of the N objects.

For more detailed descriptions of the processing unit 510 and the transceiver unit 520, refer directly to related descriptions in the foregoing methods. Details are not described herein again.

As shown in FIG. 6, a communication apparatus 600 includes a processor 610 and an interface circuit 620. The processor 610 and the interface circuit 620 are coupled to each other. It may be understood that the interface circuit 620 may be a transceiver, an input/output interface, a pin, or the like. Optionally, the communication apparatus 600 may further include a memory 630, which is configured to store instructions executed by the processor 610, or store input data required by the processor 610 to run the instructions, or store data generated after the processor 610 runs the instructions.

When the communication apparatus 600 is configured to implement the foregoing methods, the processor 610 is configured to implement a function of the processing unit 510, and the interface circuit 620 is configured to implement a function of the transceiver unit 520.

When the foregoing apparatus is a module used in a CU, a DU, an RU or an SMOF, the module implements a function of the CU, the DU, the RU, the SMOF, or the like in the foregoing methods. The module may be a chip in the CU, the DU, the RU, the SMOF, or the like, or may be another module or the like.

It may be understood that the processor in this disclosure may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA), or another programmable logic device, a transistor logic device, a hardware component, or any combination thereof. The general-purpose processor may be a microprocessor, or may be any conventional processor.

The memory in this disclosure may be a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium known in the art.

An example storage medium is coupled to the processor, so that the processor can read information from the storage medium and can write information to the storage medium. The storage medium may alternatively be a component of the processor. The processor and the storage medium may be located in an ASIC. In addition, the ASIC may be located in a base station or a terminal. It is clear that, the processor and the storage medium may alternatively exist in the base station or the terminal as discrete components.

All or some of the methods in this disclosure may be implemented through software, hardware, firmware, or any combination thereof. When software is used for implementation, all or some of the methods may be implemented in a form of a computer program product. The computer program product includes one or more computer programs or instructions. When the computer programs or instructions are loaded and executed on a computer, all or some of the processes or functions in this disclosure are performed. The computer may be a general-purpose computer, a dedicated computer, a computer network, a network device, user equipment, a core network device, an OAM, or another programmable apparatus. The computer programs or instructions may be stored in a computer-readable storage medium, or transmitted from one computer-readable storage medium to another computer-readable storage medium. For example, the computer programs or instructions may be transmitted from one website site, computer, server, or data center to another website site, computer, server, or data center in a wired or wireless manner. The computer-readable storage medium may be any usable medium that can be accessed by the computer, or a data storage device such as a server or a data center that integrates one or more usable media. The usable medium may be a magnetic medium, for example, a floppy disk, a hard disk, or a magnetic tape; may be an optical medium, for example, a digital video disc; or may alternatively be a semiconductor medium, for example, a solid state drive. The computer-readable storage medium may be a volatile or non-volatile storage medium, or may include two types of storage medium of volatile and non-volatile.

In this disclosure, unless otherwise specified or there is a logic conflict, terms and/or descriptions in different examples are consistent and may be mutually referenced, and technical features in different examples may be combined to form a new example based on internal logical relationships of different examples.

In this disclosure, "at least one" means one or more, and "a plurality of" means two or more. "And/or" describes an association relationship between associated objects, and indicates that three relationships may exist, for example, A and/or B may indicate the following cases: A exists alone, both A and B exist, and B exists alone, where A and B may be singular or plural. In the text descriptions of this disclosure, the character "/" generally indicates that the associated objects are in an "or" relationship. In the formula of this disclosure, the character "/" indicates that the associated objects are in a "division" relationship. "Including at least one of A, B, or C" may indicate that: Ais included; B is included; C is included; A and B are included; A and C are included; B and C are included; or A, B, and C are included.

It may be understood that various numerical numbers in this disclosure are merely for distinguishing for ease of description, and are not intended to limit the scope of this disclosure. The sequence numbers of the foregoing processes do not mean the execution sequence, and the execution sequence of the processes should be determined based on the functions and internal logic of the processes.

## Claims

1. A root cause failure determining method, comprising:
determining alarm information of N objects, wherein N is an integer greater than or equal to 2; and
determining a root cause failure of the alarm information of the N objects based on an object association relationship, wherein the root cause failure is alarm information of M objects in the N objects, and M is a positive integer less than N.

2. The method according to claim 1, wherein the determining a root cause failure of the alarm information of the N objects based on an object association relationship comprises:
determining the root cause failure of the alarm information of the N objects based on the object association relationship and generation time of the alarm information of the N objects.

3. The method according to claim 2, wherein the determining the root cause failure of the alarm information of the N objects based on the object association relationship and generation time of the alarm information of the N objects comprises:
determining X association relationship sets based on the object association relationship; and
for each association relationship set: determining L objects in the association relationship set based on generation time of alarm information of objects comprised in the association relationship set, wherein a generation time difference of alarm information of the L objects is less than a threshold; and determining a root cause failure of the alarm information of the L objects, wherein the root cause failure is alarm information of at least one of the L objects, and both X and L are positive integers.

4. The method according to claim 2, wherein the determining the root cause failure of the alarm information of the N objects based on the object association relationship and generation time of the alarm information of the N objects comprises:
determining P association relationship sets based on the object association relationship and the generation time of the alarm information of the N objects; and
for each association relationship set: determining a root cause failure of alarm information of Q objects comprised in the association relationship set, wherein the root cause failure is alarm information of at least one of the Q objects, the Q objects have an association relationship, a generation time difference of the alarm information of the Q objects with the association relationship is less than a threshold, and both P and Q are positive integers.

5. The method according to any one of claims 1 to 4, wherein the N objects comprise N1 objects and N2 objects, both N1 and N2 are positive integers, a sum of N1 and N2 is equal to N, and the determining alarm information of N objects comprises:
detecting alarm information of the N1 objects; and
receiving alarm information of the N2 objects from a second network element.

6. The method according to claim 5, wherein a first network element is a central unit CU, the second network element is a distributed unit DU, the alarm information of the N1 objects comprises alarm information of an object of the CU, and the alarm information of the N2 objects comprises at least one of the following: alarm information of an object of the DU, alarm information of an object of a radio unit RU, alarm information of an object of a cloud resource corresponding to the RU, or alarm information of an object of a cloud resource corresponding to the DU.

7. The method according to claim 5, wherein a first network element is a DU, the second network element is an RU, the alarm information of the N1 objects comprises alarm information of an object of the DU, and the alarm information of the N2 objects comprises at least one of the following: alarm information of an object of the RU, or alarm information of an object of a cloud resource corresponding to the RU.

8. The method according to claim 5, wherein a first network element is an RU, a DU, or a CU, the alarm information of the N1 objects comprises alarm information of an object of the first network element, the second network element is a cloud resource corresponding to the first network element, and the alarm information of the N2 objects comprises alarm information of an object of the cloud resource corresponding to the first network element.

9. The method according to any one of claims 5 to 8, wherein for the N2 objects, alarm information of each object is first-type alarm information, and the first-type alarm information comprises at least one of the following: an identifier of the object, an identifier of the second network element, or an identifier of a network element associated with the second network element.

10. The method according to any one of claims 1 to 9, further comprising:
sending first indication information to a third network element, wherein the first indication information indicates the root cause failure of the alarm information of the N objects.

11. The method according to any one of claims 1 to 10, further comprising:
obtaining the object association relationship, wherein the object association relationship is indicated by a configuration file or a configuration message from a third network element.

12. The method according to claim 11, wherein the obtaining the object association relationship comprises:
receiving a first configuration file or a first configuration message from the third network element, wherein the first configuration file or the first configuration message indicates a first object association relationship;
receiving a second configuration file or a second configuration message from the third network element, wherein the second configuration file or the second configuration message indicates a second object association relationship; and
determining the object association relationship based on the first object association relationship and the second object association relationship.

13. The method according to any one of claims 1 to 4, wherein the N objects comprise N1 objects, N2 objects, and N3 objects, values of N1, N2, and N3 are all positive integers, a sum of N1, N2 and N3 is equal to N, and the determining alarm information of N objects comprises:
receiving alarm information from a first network element, wherein the alarm information comprises alarm information of the N1 objects;
receiving alarm information from a second network element, wherein the alarm information comprises alarm information of the N2 objects; and
receiving alarm information from a third network element, wherein the alarm information comprises alarm information of the N3 objects.

14. The method according to claim 13, wherein the alarm information is second-type alarm information, and the second-type alarm information comprises at least one of the following: an object identifier, an identifier of a corresponding network element, a failure identifier, or a failure cause.

15. A root cause failure determining method, comprising:
sending alarm information of N2 objects to a first network element, wherein the alarm information is first-type alarm information, wherein
for the N2 objects, first-type alarm information of each object comprises at least one of the following: an identifier of the object, an identifier of a second network element, or an identifier of a network element associated with the second network element, wherein N2 is a positive integer.

16. A root cause failure determining method, comprising:
receiving first indication information, wherein the first indication information indicates a root cause failure of alarm information of N objects, wherein
the root cause failure is alarm information of M objects in the N objects, N is a positive integer greater than or equal to 2, and M is a positive integer less than N.

17. The method according to claim 16, further comprising:
sending, to a first network element, a configuration file or a configuration message that indicates an object association relationship.

18. The method according to claim 17, wherein the sending, to a first network element, a configuration file or a configuration message that indicates an object association relationship comprises:
sending a first configuration file or a first configuration message to the first network element, wherein the first configuration file or the first configuration message indicates a first object association relationship; and
sending a second configuration file or a second configuration message to the first network element, wherein the second configuration file or the second configuration message indicates a second object association relationship.

19. The method according to any one of claims 16 to 18, wherein the N objects comprise N1 objects and N2 objects, both N1 and N2 are positive integers, and a sum of N1 and N2 is equal to N, wherein
the N1 objects comprise an object of a central unit CU, and the N2 objects comprise at least one of the following: an object of a distributed unit DU, an object of a cloud resource corresponding to the DU, an object of a radio unit RU, or an object of a cloud resource corresponding to the RU;
the N1 objects comprise an object of a DU, and the N2 objects comprise at least one of the following: an object of an RU, or an object of a cloud resource corresponding to the RU; or
the N1 objects comprise an object of a CU, an object of a DU, or an object of an RU, and the N2 objects comprise an object of a cloud resource corresponding to the CU, an object of a cloud resource corresponding to the DU, or an object of a cloud resource corresponding to the RU.

20. The method according to any one of claims 16 to 18, wherein the N objects comprise N1 objects, N2 objects, and N3 objects, N1, N2, and N3 are all positive integers, and a sum of N1, N2, and N3 is equal to N, wherein
the N1 objects comprise an object of a CU, the N2 objects comprise an object of a DU, and the N3 objects comprise an object of an RU.

21. A communication apparatus, comprising a unit configured to implement the method according to any one of claims 1 to 14.

22. A communication apparatus, comprising a processor and a memory, wherein the processor is coupled to the memory, and the processor is configured to implement the method according to any one of claims 1 to 14.

23. A communication apparatus, comprising a unit configured to implement the method according to claim 15.

24. A communication apparatus, comprising a processor and a memory, wherein the processor is coupled to the memory, and the processor is configured to implement the method according to claim 15.

25. A communication apparatus, comprising a unit configured to implement the method according to any one of claims 16 to 20.

26. A communication apparatus, comprising a processor and a memory, wherein the processor is coupled to the memory, and the processor is configured to implement the method according to any one of claims 16 to 20.

27. A communication system, comprising the communication apparatus according to claim 21 or 22, the communication apparatus according to claim 23 or 24, and the communication apparatus according to claim 25 or 26.

28. A computer-readable storage medium, wherein the computer-readable storage medium stores instructions, and when the instructions are run on a computer, the computer is enabled to perform the method according to any one of claims 1 to 14, the method according to claim 15, or the method according to any one of claims 16 to 20.

29. A computer program product, comprising instructions, wherein when the instructions are run on a computer, the computer is enabled to perform the method according to any one of claims 1 to 14, the method according to claim 15, or the method according to any one of claims 16 to 20.
